**Europäisches Patentamt**

(19) **European Patent Office**

**Office européen des brevets**

(11) Publication number : **0 460 215 B1**

(12) # EUROPEAN PATENT SPECIFICATION

(45) Date of publication of patent specification :
**05.07.95 Bulletin 95/27**

(51) Int. Cl.[6] : **H01F 1/34,** C04B 35/38

(21) Application number : **90912078.4**

(22) Date of filing : **09.08.90**

(86) International application number :
**PCT/JP90/01017**

(87) International publication number :
**WO 91/10241 11.07.91 Gazette 91/15**

(54) **LOW-LOSS OXIDE MAGNETIC MATERIAL.**

(30) Priority : **26.12.89 JP 339358/89**
**28.12.89 JP 341277/89**
**05.02.90 JP 24364/90**

(43) Date of publication of application :
**11.12.91 Bulletin 91/50**

(45) Publication of the grant of the patent :
**05.07.95 Bulletin 95/27**

(84) Designated Contracting States :
**DE GB IT**

(56) References cited :
**JP-A- 0 254 902**
**JP-A- 1 259 509**
**JP-A- 5 836 974**
**JP-A- 6 362 206**
**JP-A-61 252 606**
**JP-A-63 151 620**
**US-A- 4 246 128**
**CHEMICAL ABSTRACTS, vol. 90, no. 2, 8**
**January 1979, Columbus, Ohio, US;abstract**
**no. 15553q, FOMENKO G. V. & AL. 'Magnetic**
**properties of manganese-znc ferrites contain-**
**ing titanium,zirconium, and hafnium dioxide**
**additions' page 616 ;column L ;**

(73) Proprietor : **TOKIN CORPORATION**
**7-1, Koriyama 6-chome**
**Taihaku-ku**
**Sendai-shi Miyagi-ken 982 (JP)**

(72) Inventor : **SHOJI, Kiyoshi**
**Tokin Corporation**
**7-1, Koriyama 6-chome**
**Taihaku-ku**
**Sendai-shi Miyagi-ken 982 (JP)**
Inventor : **OTSUKA, Tsutomu**
**Tokin Corporation**
**7-1, Koriyama 6-chome**
**Taihaku-ku Sendai-shi Miyagi-ken 982 (JP)**
Inventor : **YONEKURA, Atsushi Tokin**
**Corporation**
**7-1, Koriyama 6-chome**
**Taihaku-ku**
**Sendai-shi Miyagi-ken 982 (JP)**
Inventor : **CHIBA, Tetsuyoshi**
**Tokin Corporation**
**7-1, Koriyama 6-chome**
**Taihaku-ku Sendai-shi Miyagi-ken 982 (JP)**
Inventor : **CHIBA, Tatsuya**
**Tokin Corporation**
**7-1, Koriyama 6-chome**
**Taihaku-ku Sendai-shi Miyagi-ken 982 (JP)**

(74) Representative : **Prüfer, Lutz H., Dipl.-Phys.**
**Harthauser Strasse 25d**
**D-81545 München (DE)**

## Description

The present invention relates to an oxide magnetic material having a low loss property according to the generic portion of claim 1, which is used for an electric power transformer.

From JP-A-63-151 620 an oxide magnetic material having a low loss property is known which has small ferric losses for use at the frequency higher than 100 kHz. The constitution of the oxide magnetic material is such that it comprises a first component consisting on manganese oxide (MnO) of 30 - 37 mol %, zinc oxide (ZnO) of 10 - 15 mol % and the balance of ferric oxide ($Fe_2O_3$). The oxide magnetic material further contains a second component of calcium oxide (CaO) of 0.04-0.10 weight % and silicon dioxide ($SiO_2$) of 0.015-0.100 weight %. The oxide magnetic material finally comprises a zirconium oxide ($ZrO_2$) of 0.15 weight % or less. The disclosure of this reference forms a basis for the generic portion of claim 1.

From JP-A-61-252 606 a similar oxide magnetic material is known wherein the third component comprises vanadium oxide ($V_2O_5$) of 0.14 weight % or less.

From JP-A-1-259 509 a similar oxide magnetic material is known wherein the third component comprises zirkonium oxide ($ZrO_2$) of 0.10 weight % or less and aluminum oxide ($Al_2O_3$) of 0.60 weight % or less.

From JP-A-63-62 206 a similar oxide material is known wherein the third component comprises titanium dioxide ($TiO_2$) of 0.0500-0.6000 weight % and tantalum oxide ($Ta_2O_5$) of 0.0100-0.2000 weight %.

From CA-90-15 553 an improved oxide magnetic material is known wherein the first component comprises $MnO$-$ZnO$-$Fe_2O_3$, wherein $ZrO_2$ or $HfO_2$ is added in the amount of 0-0.11 %.

From US-A-4 246 128 it is known to add gallium oxides to oxide magnetic materials.

In the recent years, it has been general to use the switching frequency of higher than 100 kHz so as to make the switching power supply smaller and lighter.

However, when the conventional oxide magnetic material having a low loss property was used as a core material of a transformer for the switching power supply having its switching frequency of higher than 100 kHz, there was a deficiency that the material could not be used since the transformer itself or its peripheral parts were heated higher than an allowable temperature by power consumption based on ion losses and therefore it was damaged.

Accordingly, it is an object of the present invention to provide an oxide magnetic material having a low loss property which has small ferric losses for use at the frequency higher than 100 kHz and is capable of practical use by suppressing the temperature generation at lower level than allowed.

According to the present invention, an oxide magnetic material having a low loss property is provided which comprises a first component consisting of manganese oxide (MnO) of 30-42 mol %, zinc oxide (ZnO) of 4-19 mol % and the balance of ferric oxide ($Fe_2O_3$), and further contains a second component of calcium oxide (CaO) of 0.02-0.15 weight % and silicon dioxide ($SiO_2$) of 0.005-0.100 weight %, and a third component comprising hafnium dioxide ($HfO_2$) of 1.00 weight % or less to increase the specific resistance of said oxide magnetic material.

According to a preferred development, the oxide magnetic material having a low loss property is characterized in that the third component further includes at least one of zirconium dioxide ($ZrO_2$) of 0.30 weight % or less, vanadium oxide ($V_2O_5$) of 0.20 weight % or less and tantalic oxide ($Ta_2O_5$) of 0.30 weight % or less.

According to another preferred development, the oxide magnetic material having a low loss property is characterized in that the third component further includes at least one of aluminum oxide $Al_2O_3$ of 0.50 weight % or less, and titanic oxide $TiO_2$ of 0.30 weight % or less (excluding 0).

According to another preferred development, the oxide magnetic material having a low loss property is characterized in that the third component further includes one or more of gallic oxide $Ga_2O_3$ of 0.50 weight % or less (excluding 0), tantalic oxide ($Ta_2O_5$) of 0.80 weight % or less (excluding 0) and zirconium oxide ($ZrO_2$) of 0.50 weight % or less (excluding 0).

Here, the reason why the hafnium dioxide ($HfO_2$) of 1.00 weight % or less (excluding 0) is selected as an essential additive in the third component of the present invention is that the suitable amount of the element has effects to suppress the growing of a crystal into a large one and to increase the specific resistance of a boundary region of particles by precipitating therein.

Further, the reason why at least one of zirconium dioxide ($ZrO_2$) of 0.30 weight % or less (excluding 0), vanadium oxide ($V_2O_5$) of 0.20 weight % or less (excluding 0) and tantalic oxide ($Ta_2O_3$) of 0.300 weight % or less is selected as an optional additive in the third component of the present invention is that the suitable amount of each one of those elements has, as is the case with the hafnium dioxide ($HfO_2$), effects to suppress the growing of a crystal into a large one and to increase the specific resistance of a boundary region of particles by precipitating therein. Another reason is that these additives of hafnium dioxide, zirconium dioxide, vanadium oxide and tantalic oxide give rise to a rapid particle growth when the amount of the additives exceed the upper limits of the suitable amounts described above. The excessive amounts of additives are uneconomical and bring about a deterioration in the power loss property.

Further, the reason why at least one of aluminum oxide $Al_2O_3$ of 0.50 weight % or less (excluding 0) and titanic oxide $TiO_2$ of 0.30 weight % or less are selected other than the essential and the optional additives in the third component of the present invention is that aluminum oxide ($Al_2O_3$) and titanic oxide ($TiO_2$), in the range of the amount described, form a solid solution in the crystal and generate a uniform crystal organization which increases the internal resistance of the crystal. When the amount of the additives exceed the upper limits described above, the power loss is heavily increased.

On the other hand, gallic oxide ($Ga_2O_3$) of the present invention reacts with the main component of the ferrite to form a liquid phase and has an effect to improve the leakage property at the time of sintering. As a result, gallic oxide promotes the sintering and makes the diameters of the crystal particles uniform thereby lowering the hysteresis loss.

Fig. 1 is a diagram showing a relationship between a temperature and a power loss ($P_B$) of an oxide magnetic material according to the present invention, illustrating together with those relationships of the material adding no hafnium dioxide ($HfO_2$) (curve 1) and the material adding 1.10 weight % of hafnium dioxide ($HfO_2$) (curve 7) for a comparison purpose;

Fig. 2 is a graph showing a temperature characteristic of the power loss $P_B$ of the material of Example 8 at 1 MHz and at the maximum magnetic flux density of 500G comparing with that of the conventional ferrite material for power supply; and

Fig. 3 is a graph showing a frequency response of the power loss $P_B$ of the material of Example 9 at the maximum magnetic flux density of 500G and at the temperature of 29°C comparing with that of the conventional ferrite material for power supply.

[BEST MODE OF CARRYING OUT THE INVENTION]

Description is made below with respect to an embodiment of the present invention referring to the drawings.

-Example 1-

An oxide magnetic material was obtained by mixing a main component of 53 mol % ferric oxide ($Fe_2O_3$), 37 mol % manganese oxide (MnO) and 10 mol % zinc oxide (ZnO), a secondary component of 0.015 weight % silicon dioxide ($SiO_2$) and 0.080 weight % calcium oxide (CaO), and additive of hafnium dioxide ($HfO_2$), pre-heating the mixture followed by pulverizing into fine powder, granulating, press forming and thereafter sintering at 0.1 at % oxygen partial pressure and at a temperature of 1150°C.

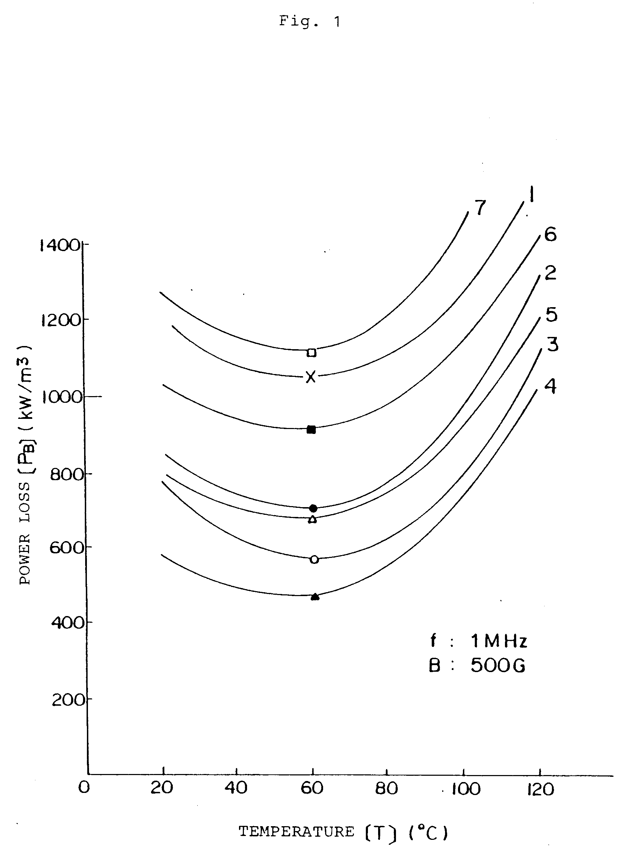

Fig. 1 is a diagram showing the relationship between a temperature T [°C] and a power loss $P_B$ [kW/m³] of the material thus obtained with an amount of the hafnium dioxide ($HfO_2$) varied as a parameter. In Fig. 1, the power loss $P_B$ [kW/m³] is measured at a frequency of 1 MHz and at a maximum magnetic flux density of 500G. Further, the curve 1 shows a characteristic wherein no hafnium dioxide ($HfO_2$) is added. Curves 2-7 show the characteristic wherein hafnium dioxide ($HfO_2$) of 0.20, 0.40, 0.60, 0.80, 1.00 and 1.10 weight % are added respectively. It should be noted from Fig. 1 that the power loss $P_B$ has its minimum value at the temperature of 60°C irrespective of being added or not added with hafnium dioxide ($HfO_2$). It should be also noted that the power loss $P_B$ decreases as the amount of hafnium dioxide ($HfO_2$) increases, showing a minimum value at the amount of 0.60 weight %. The power loss $P_B$ then increases as the amount of hafnium dioxide ($HfO_2$) increases from the minimum value and becomes larger than the value wherein no hafnium dioxide ($HfO_2$) is added when the amount of hafnium dioxide ($HfO_2$) exceeds 1.10 weight %.

It is therefore understood that the power loss $P_B$ at the frequency of 1 MHz is less when hafnium dioxide ($HfO_2$) is added by 1.00 weight % or less (excluding 0) than when no hafnium dioxide ($HfO_2$) is added.

Table 1 shows various properties (such as initial permeability $\mu$i, saturation magnetic flux density $B_{15}$ (magnetic flux density at magnetization force of 15 [Oe]) [G], residual magnetic flux density Br[G] and coercive force Hc[Oe]) of the oxide magnetic material obtained in Example 1 (including, as the subsidiary component, 0.015 weight % silicon dioxide ($SiO_2$), 0.080 weight % calcium oxide (CaO) and 0.60 weight % hafnium dioxide ($HfO_2$)) and those of a conventional oxide magnetic material (including, as the subsidiary component, 0.015 weight % silicon dioxide ($SiO_2$), 0.080 weight % calcium oxide (CaO) and not including hafnium dioxide ($HfO_2$)). Both materials include, as the main component, 53 mol % ferric oxide ($Fe_2O_3$), 37 mol % manganese oxide (MnO) and 10 mol % zinc oxide (ZnO).

As is clearly shown in Table 1, the material in Example 1 of the present invention fully satisfies such properties as the initial permeability $\mu$i of 1000 or more, the saturated magnetic flux density of 500G or more and others which are required for the core material used for a switching power supply.

Accordingly, it will be understood that the additive of hafnium dioxide ($HfO_2$) enables the material to fully satisfy the properties required for the core material for a switching power supply and to improve the power loss $P_B$, in the range of frequency of more than 200 kHz, by 500 kW/m³ at the temperature of 60°C when 0.60 weight % of hafnium dioxide, for example, is added in comparison with the material including no hafnium dioxide.

### Table 1

| Magnetic properties | $\mu i$ | B15 | Br | Hc |
| --- | --- | --- | --- | --- |
| Samples | | [G] | [G] | [Oe] |
| Invention | 1818 | 5480 | 1880 | 0.46 |
| Prior Art | 2110 | 5000 | 1770 | 0.35 |

-Example 2-

According to processes of mixing, press-forming and sintering the oxide powders, a plurality of oxide magnetic materials having a low loss property according to Example 2 of the present invention were obtained which contain additives of zirconium dioxide ($ZrO_2$), aluminum oxide ($Al_2O_3$) and hafnium dioxide ($HfO_2$) at various composition ratios in the conventional low loss oxide magnetic materials comprising the main component of 53 mol % ferric oxide ($Fe_2O_3$), 36 mol % manganese oxide (MnO) and 11 mol % zinc oxide (ZnO), and the secondary component of calcium oxide (CaO) and silicon dioxide ($SiO_2$) of the amount equal to the amount of those component included in the conventional oxide magnetic material having low loss property (that is, 0.02-0.015 weight % calcium oxide (CaO) and 0.005-0.100 weight % silicon dioxide ($SiO_2$)). A conventional oxide magnetic material which does not include the above additives was also obtained. Further, a plurality of oxide magnetic material having a low loss property were further obtained as the Comparison 2 which include one or more of the above additives. In each case in Example 2, the conventional material and the Comparison 2, samples were obtained by mixing each raw materials of the prescribed amount, forming into particles, press forming and sintering in a nitrogen gas atmosphere, at an oxygen partial pressure of below 5.0 at.% and a temperature of 1100-1300°C.

Table 2 shows each amount of the secondary components and additives in samples Nos. 11, 13-17, 19, 20, 22, 23, 25 and 26, of Example 2, a sample No. 8 of the conventional type and samples Nos. 18, 21 and 24 of Comparison 2. Table 2 also shows the minimum value of the power loss $P_B$ for a given sample temperature at the frequency of 200 kHz and maximum magnetic flux density of 1000G.

According to Table 2, it is noted that the power loss decreases by addition of mixture of zirconium dioxide ($ZrO_2$), aluminum oxide ($Al_2O_3$) and hafnium dioxide ($HfO_2$), compared with the conventional sample No. 8.

It is considered that $ZrO_2$ and $HfO_2$ increase the specific resistance of a boundary region of particles of oxide magnetic material having a low loss property by precipitating in the boundary region and that $Al_2O_3$ forms a solid solution in the crystal which is effective to increase the internal resistance of the crystal and to generate a uniform crystal organization. The combined operation of additives is supposed to bring about uniform magnetic property in the composition and to increase the specific resistance throughout the entire organization thereby decreasing the iron loss.

In sample 24 of Table 2 in which 1.10 $HfO_2$ is added, abnormal particle growth was recognized which is considered to cause the increase of the power loss.

### Table 2

| Sample No. | | Secondary Component (wt%) | | Additive Component (wt%) | | | Power loss $P_B$ (KW/m$^3$) |
|---|---|---|---|---|---|---|---|
| | | $SiO_2$ | CaO | $ZrO_2$ | $Al_2O_3$ | $HfO_2$ | |
| Conventional | 8 | 0.015 | 0.040 | 0 | 0 | 0 | 450 |
| Invention | 11 | ∥ | ∥ | 0 | 0 | 0.60 | 370 |
| | 13 | ∥ | ∥ | 0 | 0.05 | 0.60 | 315 |
| | 14 | ∥ | ∥ | 0.10 | 0 | ∥ | 335 |
| | 15 | ∥ | ∥ | 0.10 | 0.05 | ∥ | 190 |
| | 16 | ∥ | ∥ | 0.15 | ∥ | ∥ | 220 |
| | 17 | ∥ | ∥ | 0.30 | ∥ | ∥ | 270 |
| Comparison | 18 | ∥ | ∥ | 0.40 | ∥ | ∥ | 460 |
| Invention | 19 | ∥ | ∥ | 0.10 | 0.25 | ∥ | 210 |
| | 20 | ∥ | ∥ | ∥ | 0.50 | ∥ | 255 |
| Comparison | 21 | ∥ | ∥ | ∥ | 0.60 | ∥ | 450 |
| Invention | 22 | ∥ | ∥ | ∥ | 0.05 | 0.80 | 225 |
| | 23 | ∥ | ∥ | ∥ | ∥ | 1.00 | 265 |
| Comparison | 24 | ∥ | ∥ | 0 | 0 | 1.10 | 500 |
| Invention | 25 | 0.025 | ∥ | 0.10 | 0.05 | 0.60 | 200 |
| | 26 | 0.015 | 0.060 | ∥ | ∥ | 0.60 | 245 |

-Example 3-

A plurality of samples of oxide magnetic materials having a low loss property according to Example 3 of the present invention were obtained which comprise the main component similar to that of Example 2, the secondary component of the same amount as in the conventional oxide magnetic materials having a low loss property and additives of titanic oxide ($TiO_2$), vanadium oxide ($V_2O_5$) and hafnium dioxide ($HfO_2$) at various composition ratios. For the comparison purpose, a conventional type sample including no such additives as described above and a plurality of samples of oxide magnetic materials having a low loss property as Comparison 3 including one or more of the above additives.

In each case in Example 2, the conventional sample and the Comparison 2, samples were obtained by mixing each raw materials of the prescribed amount, forming into particles, press forming and sintering in a nitrogen gas atmosphere, at an oxygen partial pressure of below 5.0 at.% and at a temperature of 1100-1300°C in a similar manner as in Example 2.

Table 3 shows each amount of the secondary components and additives in samples Nos. 29, 31-35, 37, 38, 40, 41, 43 and 44, of Example 3, a sample No. 8 of the conventional type and samples Nos. 36, 39 and 42 of Comparison 3. Table 3 also shows the minimum values of the power loss $P_B$ for the given sample temperature at the frequency of 200 kHz and maximum magnetic flux density of 1000G.

According to Table 3, it is noted that the power loss decreases in comparison with the conventional type sample No. 8 by addition of the mixture of titanic oxide ($TiO_2$), vanadium oxide ($V_2O_5$) and hafnium dioxide ($HfO_2$). It is considered that $V_2O_5$ and $HfO_2$ increase the specific resistance of a boundary region of particles by precipitating in the boundary region and generate a uniform crystal organization. The combined operation is supposed to decrease the power loss as in Example 2.

In sample 42 of Table 3 in which 1.10 weight % $HfO_2$ is added, abnormal particle growth was recognized which is considered to cause the increase of the power loss.

Table 4 comparatively shows each magnetic property such as the initial permeability $\mu$, the saturated magnetic flux density $B_{15}$, the residual flux density Br and the specific resistance $\rho$ of sample No. 8 of the conventional type and sample No. 15 of the Example 2 of the present invention, respectively. Table 5 also shows each magnetic property of sample No. 8 of the conventional type and sample No. 33 of the Example 3 of the present invention, respectively.

In Tables 4 and 5, samples No. 8, No. 15 and No. 33 are almost matched with each other in $\mu$, $B_{15}$ and Br. The specific resistances of sample No. 15 of Example 2 and of sample No. 33 of Example 3 are more than 10 times as high as that of sample No. 8 of the conventional type. It is, therefore, understood that the remarkable increase in the specific resistance is the main cause of the decrease in eddy current loss.

Table 3

| Sample No. | | Secondary Component (wt%) | | Additive Component (wt%) | | | Power loss $P_B$ (KW/m$^3$) |
|---|---|---|---|---|---|---|---|
| | | $SiO_2$ | CaO | $TiO_2$ | $V_2O_5$ | $HfO_2$ | |
| Conventional | 8 | 0.015 | 0.040 | 0 | 0 | 0 | 450 |
| Invention | 29 | 〃 | 〃 | 0 | 0 | 0.40 | 380 |
| | 31 | 〃 | 〃 | 0 | 0.05 | 0.60 | 330 |
| | 32 | 〃 | 〃 | 0.05 | 0 | 〃 | 335 |
| | 33 | 〃 | 〃 | 0.05 | 0.05 | 〃 | 230 |
| | 34 | 〃 | 〃 | 0.10 | 〃 | 〃 | 270 |
| | 35 | 〃 | 〃 | 0.30 | 〃 | 〃 | 300 |
| Comparison | 36 | 〃 | 〃 | 0.40 | 〃 | 〃 | 470 |
| Invention | 37 | 〃 | 〃 | 0.05 | 0.10 | 〃 | 245 |
| | 38 | 〃 | 〃 | 〃 | 0.20 | 〃 | 465 |
| Comparison | 39 | 〃 | 〃 | 〃 | 0.30 | 〃 | 410 |
| Invention | 40 | 〃 | 〃 | 〃 | 0.05 | 0.80 | 255 |
| | 41 | 〃 | 〃 | 〃 | 〃 | 1.00 | 305 |
| Comparison | 42 | 〃 | 〃 | 〃 | 〃 | 1.10 | 520 |
| Invention | 43 | 0.025 | 〃 | 〃 | 〃 | 0.60 | 250 |
| | 44 | 0.015 | 0.060 | 〃 | 〃 | 0.60 | 270 |

Table 4

| Magnetic properties Sample No. | $\mu$ (100kHz) | $B_{15}$ [G] | Br [G] | $\rho$ [$\Omega$cm] |
|---|---|---|---|---|
| Invention      15 | 2180 | 5020 | 1275 | 1220 |
| Conventional   8 | 2110 | 5000 | 1770 | 110 |

Table 5

| Magnetic properties Sample No. | $\mu$ (100kHz) | $B_{15}$ [G] | Br [G] | $\rho$ [$\Omega$cm] |
|---|---|---|---|---|
| Invention      33 | 2200 | 5035 | 1310 | 1175 |
| Conventional   8 | 2110 | 5000 | 1770 | 110 |

As shown in the Examples 2 and 3 in which the power loss is decreased at the frequency higher than 100 kHz, it is confirmed that the oxide magnetic material having a low loss property is obtained which is excellent as core materials for a high frequency switching power supply operated at a frequency higher than 100 kHz.

-Example 4-

An oxide magnetic material was obtained by mixing the main component of 53 mol % ferric oxide ($Fe_2O_3$), 39 mol % manganese oxide (MnO) and 8 mol % zinc oxide (ZnO), and, as a secondary component, one or more of silicon dioxide ($SiO_2$), calcium oxide (CaO), hafnium dioxide ($HfO_2$), zirconium dioxide ($ZrO_2$), aluminum oxide ($Al_2O_3$) and vanadium oxide ($V_2O_5$), followed by granulating, press forming and thereafter sintering at 5.0 at.% oxygen partial pressure and at a temperature of 1100-1300°C which is optimum temperature for each component.

Table 6 shows the values of the power loss (the iron loss) of the respective Mn-Zn ferrites at a temperature of around 60°C and at a frequency of 1 MHz and the maximum magnetic flux density B of 500G (Gauss), each of which comprises 53 mol % ferric oxide ($Fe_2O_3$), 39 mol % manganese oxide (MnO) and 8 mol % zinc oxide (ZnO) as main component, and is added with silicon dioxide ($SiO_2$) and calcium oxide (CaO) as the secondary

component, hafnium dioxide ($HfO_2$) and zirconium dioxide ($ZrO_2$) as additives, aluminum oxide ($Al_2O_3$) and vanadium oxide ($V_2O_5$) as selective additives.

Description is made with reference to Table 6 showing the correspondence between the secondary components and the power losses.

From Table 6, it is seen that the power loss of the present invention exhibits lower values than those of the conventional oxide magnetic materials having a low loss property and that the characteristic values were improved by 50% compared with the conventional ones by composite addition of hafnium dioxide ($HfO_2$), zirconium dioxide ($ZrO_2$), aluminum oxide ($Al_2O_3$) and vanadium oxide ($V_2O_5$).

It is seen that the power loss of the sample (sample No. 58) becomes large in which hafnium dioxide ($HfO_2$) is added by an excessive amount of 1.10 weight %.

Table 6

| Sample No. | Secondary Component (wt%) | | | | | | Power loss |
|---|---|---|---|---|---|---|---|
| | $SiO_2$ | CaO | $HfO_2$ | $ZrO_2$ | $Al_2O_3$ | $V_2O_5$ | $P_B (KW/m^3)$ |
| 45* | 0.015 | 0.080 | 0 | 0 | 0 | 0 | 1050 |
| 46* | 0.010 | 0.020 | 0.40 | 0 | 0 | 0 | 600 |
| 49 | 〃 | 〃 | 0.40 | 0 | 0 | 0.05 | 665 |
| 50* | 0.040 | 0.060 | 〃 | 0.10 | 0 | 0 | 500 |
| 51* | 〃 | 〃 | 〃 | 0 | 0.10 | 0 | 525 |
| 52 | 〃 | 〃 | 〃 | 0 | 0 | 0.05 | 560 |
| 53* | 0.005 | 〃 | 〃 | 0.10 | 0.10 | 0 | 470 |
| 54 | 〃 | 〃 | 〃 | 0.10 | 0 | 0.05 | 480 |
| 55 | 〃 | 〃 | 〃 | 0 | 0.10 | 〃 | 500 |
| 56 | 0.010 | 〃 | 〃 | 0.10 | 〃 | 〃 | 410 |
| 58* | 0.060 | 0.080 | 1.10 | 0 | 0 | 0 | 1180 |
| 59 | 〃 | 〃 | 0.40 | 0 | 0.70 | 0.05 | 505 |
| 60 | 〃 | 〃 | 〃 | 0.20 | 〃 | 〃 | 455 |
| 61 | 〃 | 〃 | 〃 | 0.60 | 0 | 〃 | 1060 |
| 62 | 〃 | 〃 | 〃 | 0.10 | 〃 | 〃 | 485 |
| 63 | 〃 | 〃 | 〃 | 〃 | 0.50 | 〃 | 480 |
| 64 | 〃 | 〃 | 〃 | 〃 | 0.60 | 〃 | 1050 |
| 65 | 〃 | 〃 | 〃 | 〃 | 0.10 | 0 | 555 |
| 66 | 〃 | 〃 | 〃 | 〃 | 〃 | 0.20 | 490 |
| 67 | 〃 | 〃 | 〃 | 〃 | 〃 | 0.30 | 1070 |
| 68 | 0.030 | 0.100 | 〃 | 〃 | 〃 | 0.05 | 430 |
| 69 | 0.020 | 0.100 | 〃 | 〃 | 〃 | 〃 | 470 |

The sample with mark * has the common secondary component with the sample of Table 7.

-Example 5-

In a similar manner as in Example 4, an oxide magnetic material was obtained by mixing the main component of 53 mol % ferric oxide ($Fe_2O_3$), 39 mol % manganese oxide (MnO) and 8 mol % zinc oxide (ZnO), the secondary component of silicon dioxide ($SiO_2$), calcium oxide (CaO), hafnium dioxide ($HfO_2$) and zirconium dioxide ($ZrO_2$), and, as a selection component, one or more of aluminium oxide ($Al_2O_3$) and titanium oxide ($TiO_2$) and vanadium oxide ($V_2O_5$), followed by granulating, press forming and thereafter sintering at 5.0 at.% oxygen partial pressure and at a temperature of 1100-1300°C which is optimum temperature for each component.

Table 7 shows the values of the power loss (the iron loss) of the respective compositions, each comprising 53 mol % ferric oxide ($Fe_2O_3$), 39 mol % manganese oxide (MnO) and 8 mol % zinc oxide (ZnO) as the main component, silicon dioxide ($SiO_2$), calcium oxide (CaO) added with hafnium dioxide ($HfO_2$) and zirconium dioxide ($ZrO_2$) as the secondary component, aluminium oxide ($Al_2O_3$) and titanium oxide ($TiO_2$) as selective component, at a temperature of around 60°C, at the frequency of 1 MHz and at the maximum magnetic flux density B of 500G (Gauss).

Description is made with reference to Table 7 showing the correspondence between the secondary component and the power losses.

Table 7

| Sample No. | Secondary Component (wt%) | | Additive Component (wt%) | | | | Power loss $P_B$ (KW/m³) |
|---|---|---|---|---|---|---|---|
| | $SiO_2$ | CaO | $HfO_2$ | $ZrO_2$ | $Al_2O_3$ | $TiO_2$ | |
| 72* | 0.015 | 0.080 | 0 | 0 | 0 | 0 | 1050 |
| 73* | 0.010 | 0.020 | 0.40 | 0 | 0 | 0 | 600 |
| 76 | ″ | ″ | ″ | 0 | 0 | 0.10 | 640 |
| 77 | 0.040 | 0.060 | ″ | 0.10 | 0 | 0 | 500 |
| 78* | ″ | ″ | ″ | 0 | 0.10 | 0 | 525 |
| 79 | ″ | ″ | ″ | 0 | 0 | 0.10 | 580 |
| 80* | 0.005 | ″ | ″ | 0.10 | 0.10 | 0 | 470 |
| 81 | ″ | ″ | ″ | 0.10 | 0 | 0.10 | 500 |
| 82 | ″ | ″ | ″ | 0 | 0.10 | ″ | 515 |
| 83 | 0.010 | ″ | ″ | 0.10 | ″ | ″ | 440 |
| 85 | ″ | 0.080 | 1.10 | 0 | 0 | 0 | 1180 |
| 86 | ″ | ″ | 0.40 | 0 | 0.10 | 0.10 | 530 |
| 87 | ″ | ″ | ″ | 0.20 | ″ | ″ | 450 |
| 88 | ″ | ″ | ″ | 0.60 | ″ | ″ | 1050 |
| 89 | ″ | ″ | ″ | 0.10 | ″ | ″ | 523 |
| 90 | ″ | ″ | ″ | ″ | 0.50 | ″ | 515 |
| 91 | ″ | ″ | ″ | ″ | 0.60 | ″ | 1080 |
| 92 | ″ | ″ | ″ | ″ | 0.10 | 0 | 555 |
| 93 | ″ | ″ | ″ | ″ | ″ | 0.25 | 550 |
| 94 | ″ | ″ | ″ | ″ | ″ | 0.40 | 1100 |
| 95 | 0.030 | 0.100 | ″ | ″ | ″ | 0.10 | 460 |
| 96 | 0.020 | 0.100 | ″ | ″ | ″ | ″ | 475 |

The sample with mark * has the common secondary component with the sample of Table 6.

From Table 7, it is seen that the power loss of the present invention is improved by composite addition of hafnium dioxide ($HfO_2$), zirconium dioxide ($ZrO_2$), aluminum oxide ($Al_2O_3$) and titanium oxide ($TiO_2$). The power

loss is measured at a frequency of 1MHz and at the maximum magnetic flux density of 500G (Gauss), for example, as described above.

It is seen that the power loss of the sample (sample No. 85) becomes large in which hafnium dioxide ($HfO_2$) is added by an excessive amount of 1.10 weight %.

Table 8 comparatively shows each magnetic property such as the initial permeability $\mu i$, the saturated magnetic flux density $B_{15}$, the residual flux density Br, coercive force Hc and the specific resistance $\rho$ of sample No. 56 of the Example 4, No. 83 of the Example 4 and conventional type (samples Nos. 45 and 72) respectively. The specific resistances of the magnetic material having a low loss property according to the present invention are more than 20 times as high as that of the conventional magnetic material having a low loss property.

In Examples 4 and 5, the sintering was carried out at optimal temperature in a range of 1100-1300°C in the nitrogen gas atmosphere having the oxygen partial pressure of 0.5%.

## Table 8

| Magnetic Properties Sample No. | | $\mu$ (100kHz) | $B_{15}$ [G] | Br [G] | Hc [Oe] | $\rho$ [$\Omega$cm] |
|---|---|---|---|---|---|---|
| Example 4 | 56 | 1500 | 5400 | 1900 | 0.46 | 2200 |
| Example 5 | 83 | 1750 | 5350 | 1850 | 0.45 | 2300 |
| Conventional | 45/72 | 1900 | 5000 | 1770 | 0.35 | 100 |

-Example 6-

An oxide magnetic material was obtained by mixing in a ball mill the main component of 53 mol % ferric oxide ($Fe_2O_3$), 39 mol % manganese oxide (MnO) and 8 mol % zinc oxide (ZnO), the secondary component of 0.010-0.040 weight % silicon dioxide ($SiO_2$), and 0.020-0.15 weight % calcium oxide (CaO), and the additive component of 0.01-0.80 weight % hafnium dioxide ($HfO_2$) and 0.005-0.300 weight % tantalic oxide ($Ta_2O_5$), followed by preheating, pulverizing, granulating, press forming and thereafter sintering at 0-3 % (excluding 0) oxygen partial pressure and at a temperature of 1100-1300°C for 1-4 hours.

Table 9 shows the power loss $P_B$ (kW/m$^3$) of the samples having the most excellent power loss property selected from the oxide magnetic materials obtained by varying the sintering conditions for each component at a temperature of 60°C, and at a magnetic flux density of 500G, with the composition of silicon dioxide ($SiO_2$), calcium oxide (CaO), hafnium dioxide ($HfO_2$) and tantalic oxide ($Ta_2O_5$) varied as parameters.

In Table 9, sample No. 106 is a conventional Mn-Zn ferrite for power supply comprising the main component of 53 mol % ferric oxide ($Fe_2O_3$), 39 mol % manganese oxide (MnO) and 8 mol % zinc oxide (ZnO), the secondary component of 0.015 weight % silicon dioxide ($SiO_2$), 0.080 weight % calcium oxide (CaO) having no hafnium dioxide ($HfO_2$) and tantalic oxide ($Ta_2O_5$) added.

It is seen that the oxide magnetic materials of the present invention are superior to the conventional type (sample No. 106) in each case. Further, the sample No. 102 produced by adding 0.30 weight % silicon dioxide ($SiO_2$), 0.060 weight % calcium oxicide (CaO), 0.15 weight % hafnium dioxide ($HfO_2$) and 0.05 weight % tantalic oxide ($Ta_2O_5$) has a power loss $P_B$ of about 1/2 of the power loss of the conventional ferrite realizing a remarkable low loss property.

## Table 9

| Sample No. | | Secondary Component (wt%) | | Additive Component (wt%) | | Power loss $P_B$ (KW/m$^3$) |
|---|---|---|---|---|---|---|
| | | $SiO_2$ | CaO | $Ta_2O_5$ | $HfO_2$ | |
| Invention | 97 | 0.010 | 0.040 | 0.005 | 0.01 | 835 |
| | 98 | 0.015 | 0.040 | 0.005 | 0.80 | 850 |
| | 99 | 0.010 | 0.045 | 0.300 | 0.03 | 700 |
| | 100 | 0.020 | 0.15 | 0.025 | 0.01 | 820 |
| | 101 | 0.040 | 0.090 | 0.005 | 0.01 | 875 |
| | 102 | 0.030 | 0.060 | 0.005 | 0.15 | 500 |
| | 103 | 0.030 | 0.100 | 0.010 | 0.40 | 540 |
| | 104 | 0.040 | 0.060 | 0.020 | 0.08 | 600 |
| | 105 | 0.030 | 0.040 | 0.300 | 0.65 | 925 |
| Conventional | 106 | 0.015 | 0.080 | – | – | 1050 |

1MHz 500G, 60°C, unit of each added amount is weight%.

-Example 7-

As shown in Table 10, an oxide magnetic material is obtained by mixing in a ball mill the main component of 53 mol % ferric oxide ($Fe_2O_3$), 39 mol % manganese oxide (MnO) and 8 mol % zinc oxide (ZnO), an additive component of small amount of silicon dioxide ($SiO_2$), calcium oxide (CaO), gallic oxide ($Ga_2O_5$) and at least one selected from the group consisting of hafnium dioxide ($HfO_2$) of 0.80 weight % or less (excluding 0), tantalic oxide ($Ta_2O_5$) of 0.50 weight % or less (excluding 0) and zirconium dioxide ($ZrO_2$) of 0.50 weight % or less (excluding 0), preheating, pulverizing, granulating, press forming and thereafter sintering at 0-3 % (excluding 0) oxygen partial pressure and at a temperature of 1100-1300°C for 1-4 hours.

Table 10 shows the power loss $P_B$ (kW/m$^3$) of the samples having the most excellent power loss property selected from the oxide magnetic materials obtained by varying the sintering conditions for each composition at a temperature of 60°C, and at a magnetic flux density of 500G, with the composition of gallic oxide ($Ga_2O_5$), hafnium dioxide ($HfO_2$), tantalic oxide ($Ta_2O_5$) and zirconium dioxide ($ZrO_2$) varied as parameters.

Table 10

(The core loss property when the amount

of each additive is varied)

$(1\ MHz\ 500G\ 60^{\circ}C)$

| Sample No. | $Ga_2O_5$ | $Ta_2O_5$ | $HfO_2$ | $ZrO_2$ | $PB(KW/m^3)$ |
|---|---|---|---|---|---|
| 201 | 0.20 | 0.10 | – | – | 700 |
| 202 | 0.20 | 0.20 | – | – | 625 |
| 203 | 0.40 | 0.15 | – | – | 450 |
| 204 | 0.50 | 0.30 | – | – | 900 |
| 205 | 0.20 | – | 0.20 | – | 640 |
| 206 | 0.20 | – | 0.60 | – | 880 |
| 207 | 0.40 | – | 0.15 | – | 400 |
| 208 | 0.50 | – | 0.80 | – | 1010 |
| 209 | 0.10 | – | – | 0.15 | 615 |
| 210 | 0.20 | – | – | 0.40 | 975 |
| 211 | 0.10 | – | – | 0.20 | 430 |
| 212 | 0.50 | – | – | 0.50 | 980 |
| 213 | – | – | – | – | 1050 |

The unit of each additive is weight %.

Here, sample No. 213 is a conventional Mn-Zn ferrite for power supply comprising the main component of 53 mol % ferric oxide ($Fe_2O_3$), 39 mol % manganese oxide (MnO) and 8 mol % zinc oxide (ZnO), 0.080 weight % calcium oxide (CaO) and 0.015 weight % silicon dioxide ($SiO_2$) having no gallic oxide ($Ga_2O_5$), hafnium dioxide ($HfO_2$) and tantalic oxide ($Ta_2O_5$) added.

It is seen that the oxide magnetic materials of the present invention (samples Nos. 201-212) are superior to the conventional type material in each case.

Further, the sample No. 207 produced by adding 0.40 weight % gallic oxide ($Ga_2O_5$), 0.15 weight % hafnium dioxide ($HfO_2$), tantalic oxide ($Ta_2O_5$) and zirconium dioxide ($ZrO_2$) has a power loss $P_B$ of about 1/3 of the power loss of the conventional ferrite realizing a remarkable low loss property.

-Example 8-

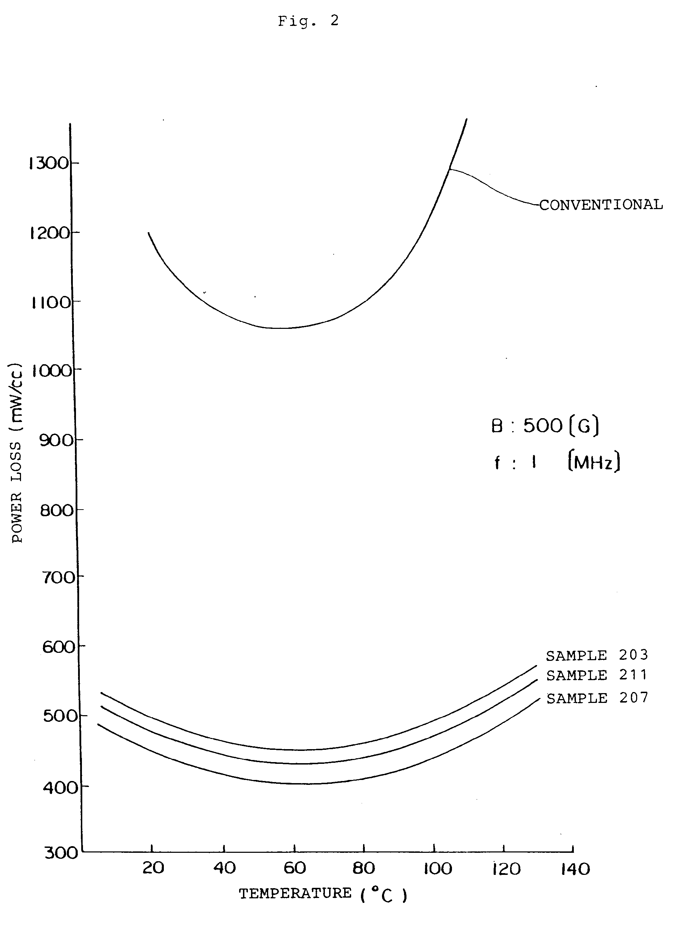

Fig. 2 shows the temperature characteristic of the power loss $P_B$ of the samples Nos. 203, 207 and 211 obtained in Example 7 at the frequency of 1 MHz and at the maximum magnetic flux density of 500G compared with those of the conventional ferrite.

It is seen from Fig. 2 that the oxide magnetic materials of the present invention are greatly superior to the conventional type material in the whole temperature range.

-Example 9-

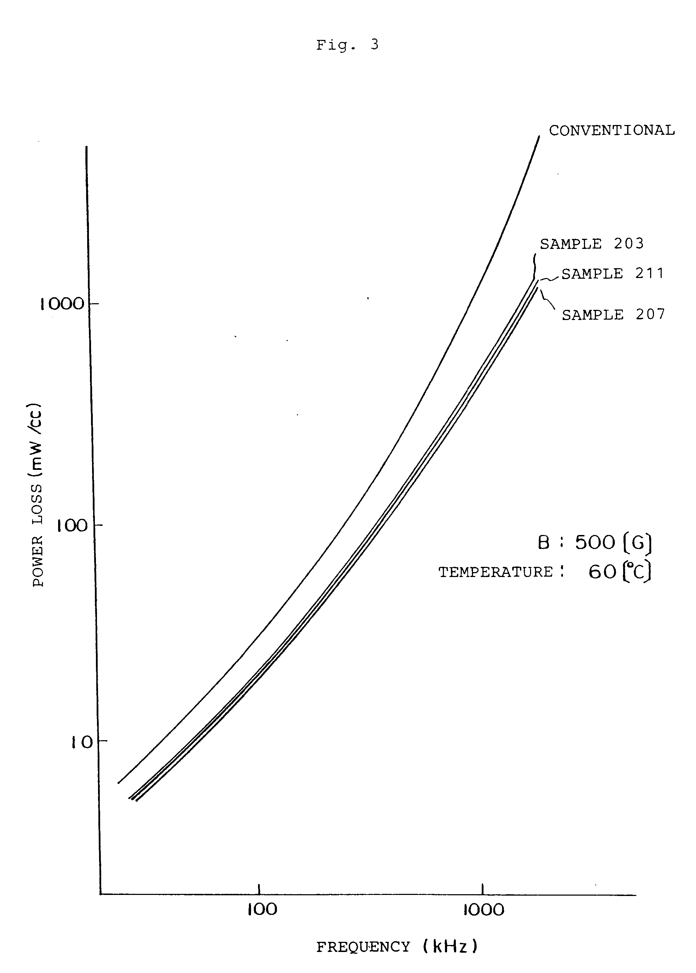

Fig. 3 shows the frequency characteristic of the power loss $P_B$ of the samples Nos. 203, 207 and 211 obtained in Example 7 at the temperature of 60°C and at the maximum magnetic flux density of 500G compared with those of the conventional ferrite.

It is seen that the oxide magnetic materials of the present invention are greatly superior to the conventional type material in the whole temperature range.

[INDUSTRIAL APPLICABILITY]

According to the present invention, an oxide magnetic material for a high frequency magnetic core is provided which fully satisfies properties required for a transformer used for a switching power supply with a reduced power loss comparing with the conventional material at the frequencies of higher than 100 kHz and which is fully suitable for making the switching power supply smaller and lighter, by adding hafnium dioxide ($HfO_2$) of 1.00 weight % or less to the conventional Mn-Zn ferrite oxide magnetic material including silicon dioxide and calcium oxide.

According to the present invention, further, it is possible to further improve the properties required for a transformer used for a power supply by further adding at least one of zirconium dioxide ($ZrO_2$) of 0.30 weight % or less (excluding 0), and tantalic oxide ($Ta_2O_5$) of 0.30 weight % or less (excluding 0) to the conventional Mn-Zn ferrite oxide magnetic material.

According to the present invention, further, it is possible to improve the properties required for a transformer used for a power supply by further adding at least one of aluminum oxide $Al_2O_3$ of below 0.50 weight % (excluding 0), and titanic oxide $TiO_2$ of below 0.30 weight % to these conventional Mn-Zn ferrite oxide magnetic materials.

According to the present invention, on the other hand, an oxide magnetic material for a high frequency magnetic core is provided which fully satisfies properties required for a transformer used for a switching power supply with a reduced power loss comparing with a conventional material at the frequencies of higher than 200 kHz and which is fully suitable for making the switching power supply smaller and lighter, by adding at least one of tantalic oxide ($Ta_2O_5$) of below 0.30 weight % (excluding 0), hafnium dioxide ($HfO_2$) of below 1.00 weight % and zirconium dioxide ($ZrO_2$) of below 0.30 weight % (excluding 0) to the conventional Mn-Zn ferrite oxide magnetic material including gallic oxide ($Ga_2O_5$) of below 0.50 weight % (excluding 0).

**Claims**

1.  An oxide magnetic material having a low loss property wherein the material consists essentially of
    a first component consisting of manganese oxide (MnO) of 30-42 mol %, zinc oxide (ZnO) of 4-19 mol % and the balance of ferric oxide ($Fe_2O_3$),
    a second component of calcium oxide (CaO) of 0.02-0.15 weight % and silicon dioxide ($SiO_2$) of 0.005-0.100 weight %,
    characterized by a third component comprising hafnium dioxide ($HfO_2$) of 1.00 weight % or less to increase the specific resistance of said oxide magnetic material.

2.  An oxide magnetic material having a low loss property according to claim 1, characterized in that
    the third component of the oxide magnetic material further includes at least one of zirconium dioxide ($ZrO_2$) of 0.30 weight % or less (excluding 0), vanadium oxide ($V_2O_5$) of 0.20 weight % or less (excluding 0) and tantalic oxide ($Ta_2O_5$) of 0.30 weight % or less (excluding 0).

3.  An oxide magnetic material having a low loss property according to claim 1 or claim 2, characterized in that
    the third component of the magnetic material further includes at least one of aluminum oxide($Al_2O_3$)of 0.50 weight % or less (excluding 0), and titanic oxide ($TiO_2$) of 0.30 weight % or less (excluding 0).

4.  An oxide magnetic material having a low loss property according to claim 1, characterized in that the third component of the magnetic material further includes one or more of gallic oxide ($Ga_2O_3$) of 0.50 weight % or less (excluding 0), tantalic oxide ($Ta_2O_5$) of 0.80 weight % or less (excluding 0) and zirconium oxide ($ZrO_2$) of 0.50 weight % or less (excluding 0).

**Patentansprüche**

1. Oxid-Magnetmaterial mit einer niedrigen Verlusteigenschaft, wobei das Material im wesentlichen aus einer ersten Komponente, die aus Manganoxid (MnO) von 30-42 Mol%, Zinkoxid (ZnO) von 4-19 Mol% und dem Rest aus Eisen (III)-oxid ($Fe_2O_3$) besteht,
einer zweiten Komponente aus Calciumoxid (CaO) von 0,02-0,15 Gew% und Siliziumdioxid ($SiO_2$) von 0,005-0,100 Gew% besteht, gekennzeichnet durch eine dritte Komponente, die Hafniumdioxid ($HfO_2$) von 1,00 Gew% oder weniger aufweist zum Erhöhen des spezifischen Widerstandes des Oxid-Magnetmateriales.

2. Oxid-Magnetmaterial mit einer niedrigen Verlusteigenschaft nach Anspruch 1, dadurch gekennzeichnet, daß die dritte Komponente des Oxid-Magnetmateriales weiter mindestens eines von Zirconiumdioxid ($ZrO_2$) von 0,30 Gew% oder weniger (ausschließlich 0), Vanadiumoxid ($V_2O_5$) von 0,20 Gew% oder weniger (ausschließlich 0) und Tantaloxid ($Ta_2O_5$) von 0,30 Gew% der weniger (ausschließlich 0) enthält.

3. Oxid-Magnetmaterial mit einer niedrigen Verlusteigenschaft nach Anspruch 1 oder Anspruch 2, dadurch gekennzeichnet,
daß die dritte Komponente des Magnetmateriales weiter mindestens eines von Aluminiumoxid ($Al_2O_3$) von 0,50 Gew% oder weniger (ausschließlich 0) und Titanoxid ($TiO_2$) von 0,30 Gew% oder weniger (ausschließlich 0) enthält.

4. Oxid-Magnetmaterial mit einer niedrigen Verlusteigenschaft nach Anspruch 1, dadurch gekennzeichnet, daß die dritte Komponente des Magnetmateriales weiter eines oder mehr von Galiumoxid ($Ga_2O_3$) von 0,50 Gew% oder weniger (ausschließlich 0), Tantaloxid ($Ta_2O_5$) von 0,80 Gew% (ausschließlich 0) und Zirconiumoxid ($ZrO_2$) von 0,50 Gew% oder weniger (ausschließlich 0) enthält.


**Revendications**

1. Matériau magnétique à base d'oxyde à faible perte, lequel matériau consiste essentiellement en
un premier composant formé par 30 à 42 % molaire d'oxyde manganique (MnO), 4 à 19 % molaire d'oxyde de zinc (ZnO), et par oxyde ferrique ($Fe_2O_3$) comme le reste,
un deuxième composant formé par 0,02 à 0,15 % en poids d'oxyde de calcium et 0,005 à 0,100 % en poids de dioxyde de silicium,
**caractérisé par** un troisième composant comtenant 1,00 % en poids ou mains de dioxyde de hafnium afin d'augmenter la résistivité du matériau magnétique à base d'oxyde.

2. Matériau magnétique à base d'oxyde à faible perte selon la revendication 1, **caractérisé en ce** que ledit troisième composant du matériau magnétique à base d'oxyde contient également au moins 0.30 ou moins (à l'exclusion de 0), % en poids de dioxyde de zirconium ($ZrO_2$) ou 0.20 ou moins % en poids d'oxyde de vanadium ($V_2O_5$), ou 0.30 ou moins % en poids d'oxyde de tantale ($Ta_2O_5$) (à l'exclusion de 0).

3. Matériau magnétique à base d'oxyde à faible perte selon la revendication 1 ou 2, **caractérisé en ce** que ledit troisième composant du matériau magnétique contient également au moins 0.50 ou moins (à l'exclusion de 0) % en poids d'oxyde d'aluminium ($Al_2O_3$) ou 0.30 ou moins (à l'exclusion de 0) % en poids d'oxyde de titane ($TiO_2$).

4. Matériau magnétique à base d'oxyde à faible perte selon la revendication 1, **caractérisé en ce** que ledit troisième composant du matériau magnétique contient également 0,50 ou moins (à l'exclusion de 0) % en poids d'oxyde de gallium ($Ga_2O_3$), ou 0,80 ou moins (à l'exclusion de 0) % en poids d'oxyde de tantale ($Ta_2O_5$), ou 0,50 ou moins (à l'exclusion de 0) % en poids d'oxyde de zirconium ($ZrO_2$).

Fig. 1

Fig. 2

Fig. 3

CONVENTIONAL

SAMPLE 203

SAMPLE 211

SAMPLE 207

B : 500 (G)
TEMPERATURE : 60 (°C)

POWER LOSS (mW /cc)

1000

100

10

FREQUENCY ( kHz )

100

1000